# EUROPEAN PATENT APPLICATION

(11) **EP 1 681 641 A2**
(43) Date of publication of application: **19.07.2006**
(21) Application number: 05112968.2
(22) Date of filing: 23.12.2005
(51) Int. Cl.: G06F 17/30

(54) **Incremental indexing**

(30) Priority: 13.01.2005 EP 05100168
(71) Applicant: International Business Machines Corporation, Armonk, N.Y. 10504 (US)
(72) Inventor: HRLE, Namik, 71032, Böblingen (DE); TENG, James, 95120, San Jose (US)
(74) Representative: Klein, Hans-Jörg

(57) **Abstract**

To increase insert performance of a database management system, it is proposed to generate an index increment (35). The index entries concerning rows (301, 302, 303) newly entered into a database table (30) are entered into the index increment (35) instead of the base index (31). The size of the index increment (35) is much less than the size of the base index (31), thus allowing for much less disk reads of the index target pages and considerable speed-up of indexing. After insert processing the index increment (35) is merged with the base index (31).

## Description

### Field of the invention

The present invention relates to the updating of a database, particularly to how to handle indexing when inserting data rows.

### Background and prior art

Computer databases are a common mechanism for storing information on computer systems while providing easy access to users. A typical database is an organized collection of related information stored as rows having fields of information. As an example, a database of employees may have a row for each employee comprising different columns or fields such as name, department, phone number, salary etc. All rows are organized as table, a two-dimensional structure with rows containing the rows and columns indicating the fields.

To speed up access to the data of the database table, every row can be indexed and the index entered into a base index. For example, one index could indicate where to find the rows containing a particular name, another index could indicate where to find the rows containing specific departments.

To allow for complete responses to queries, it is necessary that every time the database is updated by inserting a new row, the index, or if there are more than one index, all of them, be updated too, i.e. a corresponding entry has to be inserted in the index.

Both rows and indexes are physically stored on storage media such as tape or disk. When taking any action on the database, e.g. processing a query, inserting a new row, indexing a new row etc., the corresponding data has to be retrieved from the storage medium into a cache where a database management system can actually perform this action.

Especially in large databases, the index is large as well, and it takes quite a time to enter a new entry. This is particularly a problem, if the index is so large that it cannot be as a whole in the cache and a lot of storage medium reads are necessary for updating the index.

It is therefore an objective of the present invention to provide a possibility of enhancing the inserting performance.

### Summary of the invention

In a first aspect of the present invention, in a database management system for managing a database storing a database table comprising a plurality of data pages, each data page capable of storing a plurality of data rows, said data rows storing information organized into particular columns, said database table having a base index for logically ordering said plurality of data rows, said base index comprising a plurality of index entries wherein each data row is referenced by a corresponding index entry, a method for indexing the database is provided, said method comprising the steps of inserting a row, generating an index increment, making an index entry concerning said row into said index increment, and merging said index increment with said base index.

If the database is updated by inserting a new row, the indexing is done immediately, to always provide correct access to all information. But the indexing is not done in the base index. An index increment is generated and the corresponding index entry is done in the index increment instead of the base index. Later on, the index increment is merged with the base index.

The index increment will normally be much smaller than the base index, because it is newly generated. This facilitates its management a lot. The place, where to enter the new index entry, is found much faster than is the case when searching the whole base index for it. The merger of index increment and base index can be delayed to a moment, where the performance of the database management system is not impeded by this action. If a query is submitted, before index increment and base index have been merged, in addition to scanning the base index, the incremental index is scanned, too. Thus, it is ensured that correct access to all information is always provided, as well as speeding up indexing.

In preferred embodiments of the present invention, more than one row is inserted, all index entries concerning the rows are made into said index increment, and the merging is done after all rows have been inserted and indexed. In cases, where a plurality of rows is inserted, the gain in speed by indexing into an index increment instead of the base index is especially high.

Advantageously, more than one row is inserted and more than one index increment is generated. This is especially convenient, if large amounts of rows are inserted that would otherwise lead to too large an index increment, thus leading again to a slow down of the indexing.

In preferred embodiments of the present invention, the database comprises an additional base index, and an additional index increment is generated and merged with the additional base index. This also allows adapting the present invention for parallel databases as well.

According to a further aspect of the present invention, a database management system is provided for managing a database storing a database table comprising a plurality of data pages, each data page capable of storing a plurality of data rows, said data rows storing information organized into particular columns, said database table having a base index for logically ordering said plurality of data rows, said base index comprising a plurality of index entries wherein each data row is referenced by a corresponding index entry, said database management system having data and index managing means with insert processing means and non-insert processing means, wherein the data and index managing means has additionally index increment building means for generating an index increment, when a row is inserted, to enter an index entry concerning said row into said index increment, and index increment merging means for merging said index increment with said base index.

The data and index managing means operate to process the data in any way, e.g. reading data, deleting data, inserting data, responding to queries etc. These tasks are mainly categorized into tasks related to inserting done by the insert processing means, and into other tasks done by the non-insert processing means.

The database management system according to the present invention has special features in form of index increment building means and the index increment merging means, both being components of the data and index managing means. These components allow for indexing inserted rows not in the base index, but in a specially generated index increment to speed up the indexing itself. Because of the smaller size of the index increment compared with the base index, less or even no retrievals of pages of the index incremental from the storage medium are necessary, leading to a gain in speed. As soon as appropriate, the index increments merging means can merge the index increment with the base index.

Preferably, the insert processing means and the non-insert processing means are adapted to cooperate with the index increment building means and the index increment merging means to fully take advantage of their possibilities.

In preferred embodiments of the present invention, the non-insert processing means is adapted to check not only said base index, but also said incremental index, if there is any. This efficiently guarantees that independently of the time of a query, whether during updating the database or not, always all information is accessible. "Old" data may be found in the base index, "new" data may be found in index increments before merging and in the base index after merging.

In further preferred embodiments, the insert processing means is adapted to activate the incremental index building means, when it inserts a row. This provides automatic generation of index increments, if needed.

Preferably, the insert processing means is adapted to activate the index increment merging means, after it has finished inserting. Thus an automatic merging can be implemented.

In a preferred embodiment of the present invention, the database management system further comprises a cache managing means and a relational data system. The cache managing means operates to communicate with some storage medium to retrieve and load and write and store data. The relational data system performs tasks such as parsing, optimizing, predicate evaluation etc..

In a last aspect of the present invention, a computer program product is provided for a database management system having a database storing a database table comprising a plurality of data pages, each data page capable of storing a plurality of data rows, said data rows storing information organized into particular columns, said database table having a base index for logically ordering said plurality of data rows, said base index comprising a plurality of index entries wherein each data row is referenced by a corresponding index entry, said computer program product comprising computer program means being adapted to generate one or more index increments in case one or more rows are inserted into the database table, and merge the one or more index increments with said base index.

In preferred embodiments of the present invention, the database comprises an additional base index and the computer program product comprises computer program means adapted to generate an additional index increment, and merge it with the additional base index.

The present invention can be realized in hardware, software, or a combination of hardware and software. Any kind of computer system - or other apparatus adapted for carrying out the methods described herein - is suited. A typical combination of hardware and software could be a general-purpose computer system with a computer program that, when being loaded and executed, controls the computer system such that it carries out the methods described herein.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

### Brief description of the drawings

In the following, preferred embodiments of the invention will be described in greater detail by making reference to the drawings in which:
- Figure 1: schematically illustrates a database management system according to prior art;
- Figures 2a,b: schematically illustrate indexing according to prior art;
- Figures 3a,b,c,d: schematically illustrate indexing according to the invention;
- Figure 4: schematically illustrates a database management system according to the invention;
- Figure 5: illustrates a flowchart for insert processing;
- Figure 6: illustrates a flowchart for building incremental indexes;
- Figure 7: illustrates a flowchart for query processing;
- Figure 8: illustrates a flowchart for implicit merging of incremental indexes; and
- Figure 9: illustrates a flowchart for explicit merging of incremental indexes.

### Detailed description

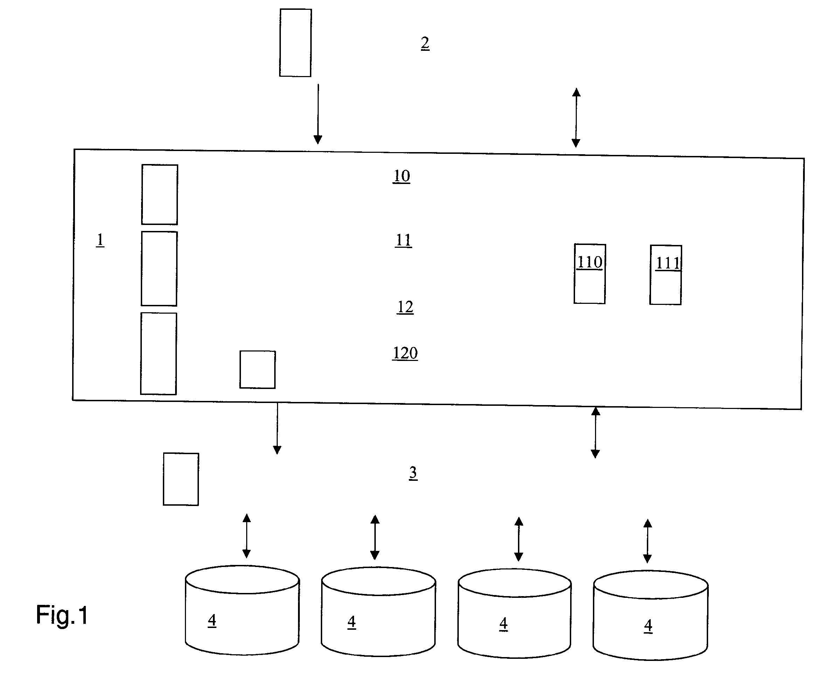

Figure 1 illustrates schematically a database management system 1 according to prior art. It may be implemented, for example, as computer with an appropriate computer program product running on it. The computer may be a stand-alone device or be a member of a network with servers and clients.

The database management system 1 includes a relational data system 10, a data and index manager 11 and a cache manager 12. It interacts with an application program 2 or interactive user that generates database requests, e.g. in the form of SQL-statements. These SQL-statements may be e.g. "insert" or non-insert statements, such as "read", "select", "delete", etc. and result in retrieval or modifications of the stored data. The database requests like mentioned SQL-statements are processed by various components, such as relational data system 10, data and index manager 11 or cache manager 12, of the database management system 1 and result in retrieval or modification of the data stored in a storage media subsystem 3,4.

In particular, the database requests are processed by the insert-processing module 110 for insert requests and by the non-insert processing module 111 for non-insert requests. Both modules 110, 111 are components of the data and index-managing module 10. In response to the database requests, e.g. SQL-statements from the application program 2, the database management system 1 returns information on rows of the database table and status information. It may also receive information on rows to add.

All data such as the content of the database table and the base index is stored on storage media 4, such as disks or tapes. To store and retrieve data, the database management system 1 uses the cache manager 12. It manages the cache 120, for example arranged as buffer pools, and communicates with the media manager 3 by sending read or write pages requests and receiving data and index pages. Pages, also called blocks, are the entities corresponding to the physical blocks of the storage media containing the data of the database. They are provided by the media manager 3 by communicating with the media storage 4 via I/O programs addressing the physical blocks.

The relational data system 10 is arranged to perform tasks such as parsing, optimizing, predicate evaluation etc..

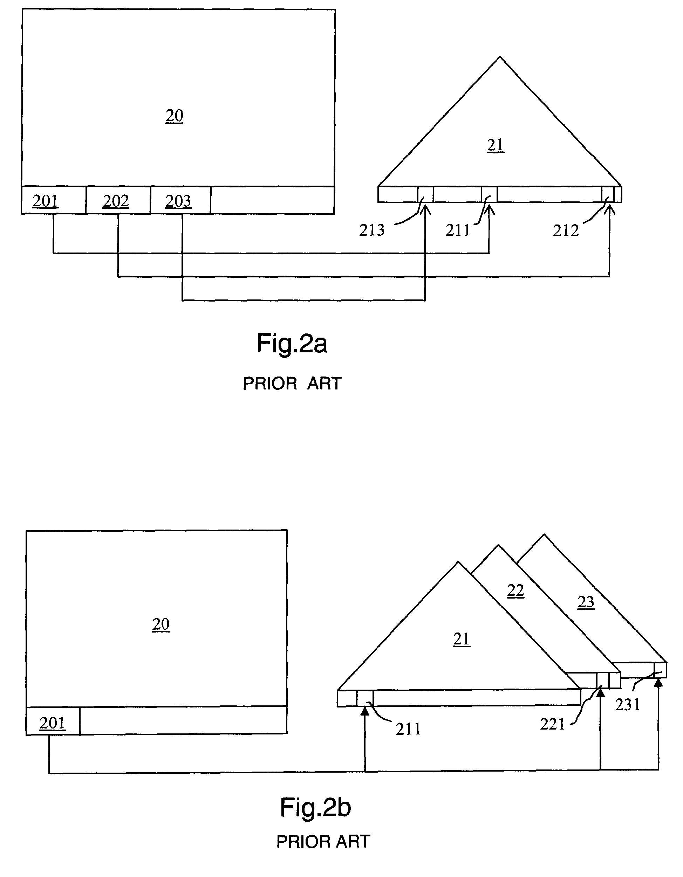

The database structure is illustrated in Figures 2a, b. There are shown the database table 20 where new data is entered as rows 201, 202, 203 with information of various categories arranged in columns (see Figures 2a,b). The base index 21 of the database table 20 is organized as tree.

For each inserted row 201, 202, 203, the index 21 has to be updated. The index update consists of adding an entry 211, 212, 213 pointing to the respective inserted database table row 201, 202, 203. The entries 211, 212, 213 are added into the index 21 at the appropriate position that is determined by the index tree structure and the index key value. Only in the case of ever increasing key values the inserted index entries are added at the end of the index resulting in no or few reads from the storage media, which consequently contributes to good performance. However, in general, an index entry needs to be added in a random fashion, with a large probability that the target index page is not in the database cache, resulting in a synchronous read from the storage media and, thus, a slow-down of the indexing process.

In Figure 2a, only one index 21 is shown. Usually, there is a multitude of further indexes indexing the database table 20 depending on different criteria. In Figure 2b, there are three indexes 21, 22, 23, each indexing the database table 20 according to a different column. Each index 21, 22, 23 has to be updated, if a row insert occurs.

If the database management system is implemented as a parallel database, i.e. a group of database systems managing the same data, the indexes have to be maintained by all involved systems, adding an additional overhead due to contention of the indexes.

For each additional index there is an additional synchronous read, which amounts to a large read wait time and results in the overall insert performance degradation. At the same time, indexing is the most important performance booster for query processing and regularly the only choice for tuning query performance. The queries also run in parallel with insert processing, so all the indexes must exist all the time to provide access to the data.

The problem is particularly severe in a special mode of operation, where massive insert processing must complete in a given time interval and critical query processing must run on the same data, including newly inserted rows, at the same time with best possible performance. This is a common case, because many applications include massive insert processing, which is usually concentrated at some period-closing times: end of the day, week, month, year. These processes regularly need to complete in a given time window, as the subsequent business operations depend on them. As the insert processing runs, the queries accessing the same data need to perform well, and for that they need the very indexes that are being updated and causing the insert operations' slow-down.

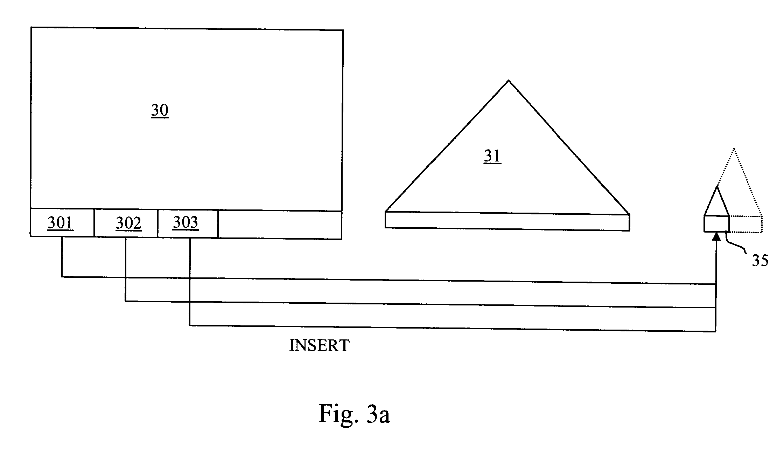

The present invention provides a solution to this problem. Especially once the pattern of massive inserts is detected, a new index tree, i.e. an index increment 35 is spawn for each base index 31 that exists on the database table 30 (see Figure 3a). Only, in case the indexes are organized based on ever increasing index key values, where the new index entries are added at the end of each index, this is not necessary - but still possible.

Particularly in case of parallel databases, even these ever increasing key indexes are preferably incrementally indexed according to the present invention. This is, because applications designed for parallel databases take care of member-to-data affinity. They are written in a way that individual database systems access data partitions that are logically isolated from other systems, i.e. they do not access the same partitions. This isolation cannot be achieved for indexes that are not partitioned along with the data, therefore for most indexes. However, with incremental indexing each database system can maintain its "own" index increments for each non-partitioning index. This isolation will be complete, thus resulting in drastic reduction of cost of sharing data.

Thanks to using an index increment 35 for indexing the newly inserted rows 301, 302, 303, a much smaller index tree has to be updated. It starts with a single page only (equivalent of one physical block of storage space) and grows with new inserts. The likelihood of target index pages being cached is much higher than in the case of updating a large monolithic base index.

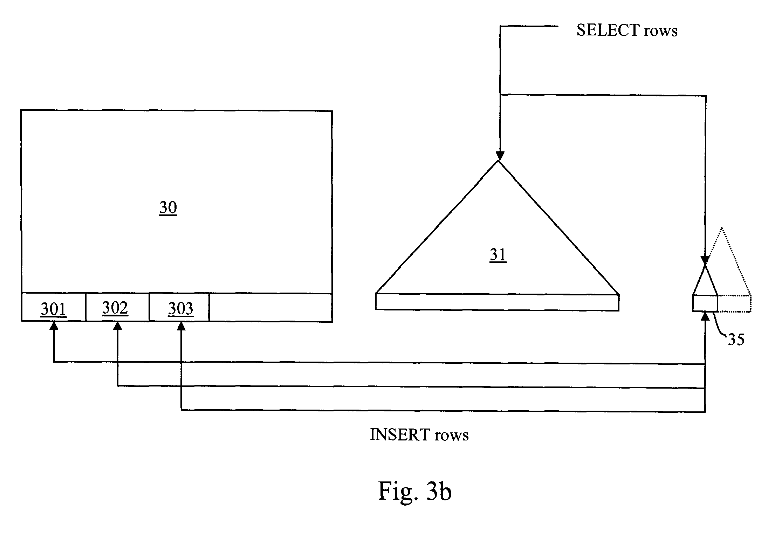

Figure 3b illustrates how a query is process during incremental indexing or before the index increment 35 has been merged with the base index 31. The query processing, in the present example "select", takes into account that a chosen index is not necessarily monolithic, but could have one or more increments. Thus, not only base index 31 is scanned for the rows to be selected, but also the index increment 35. In general, this will increase the cost of index scan, which can be minimized, if parallel index scan is implemented. But it will be off-set many times by superior insert performance. It will be noted that the scan of the active index increment 35, i.e. the one being inserted at the time, is very likely to complete without any read from the storage medium, as the concerned pages are most likely cached.

After the last new row has been inserted, the index increment 35 is merged with the base index 31. The actual time for merging can be determined automatically, or merging can explicitly started by a user. The merging time should be chosen to minimize impeding other processes like queries.

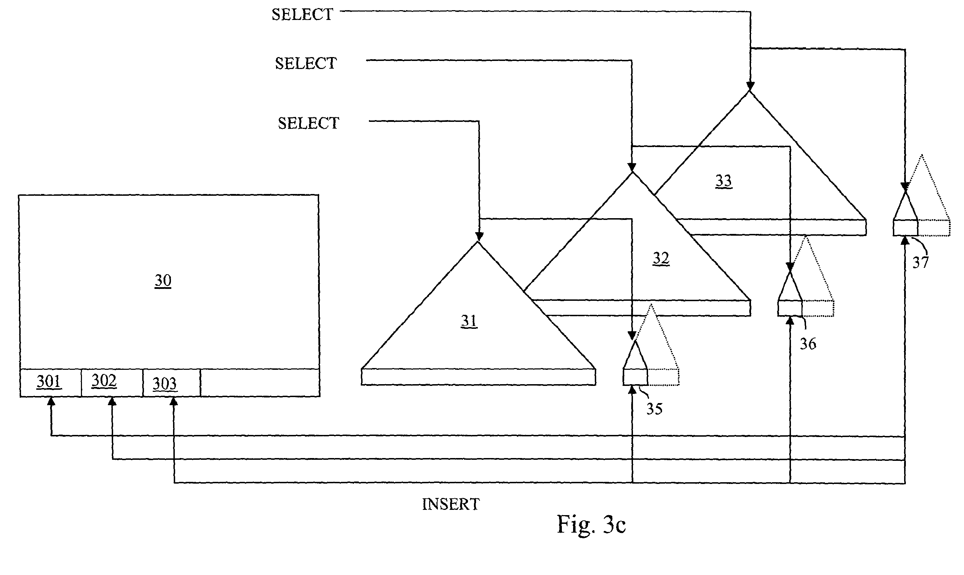

As illustrated in Figure 3c, the concept of incremental indexing can be adapted to multiple base indexes 31, 32, 33, each of them indexing the database table 30 according to different criteria. In this case an incremental index 35, 36, 37 is generated for every base index 31, 32, 33, when new rows 301, 302, 303 are inserted. Accordingly, if a query is to be processed, for example "select", not only the base indexes 31, 32, 33 are scanned, but also their associated index increments 35, 36, 37.

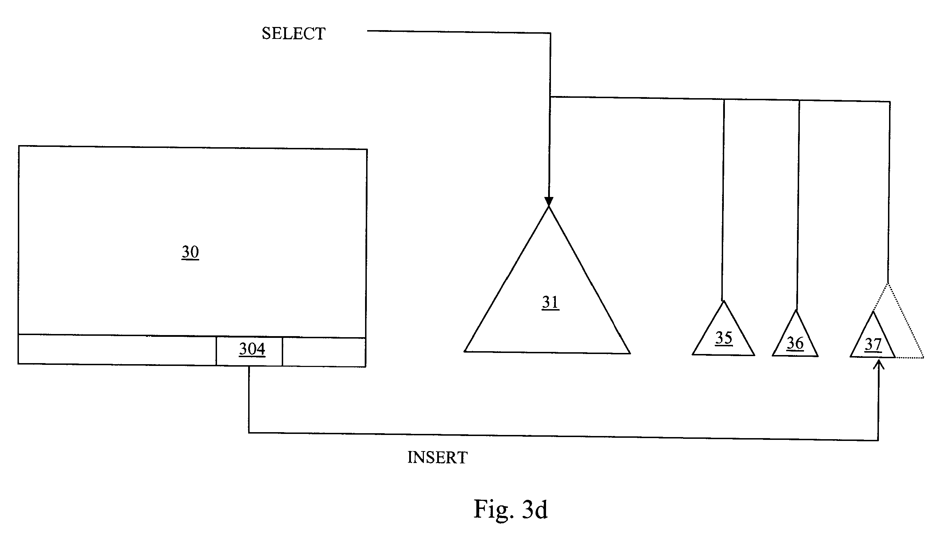

There should be at least one index increment per base index. But it can also be advantageous to have more than one index increment 35, 38, 39 per base index 31, as illustrated in Figure 3d. For example, inserting may occur in several batches before merging, than for every batch separate index increments 35, 38, 39 could be generated. If separate index increments are generated, one avoids getting an index increment too large to be memory- or cache-resident. This would lower the performance. In the example illustrated in Figure 3d, prior inserts to database table 30 have been indexed in the index increment 35 and then 38. The present insert of row 304 is indexed in the now active index increment 39.

It will be noted that the concept of more than one index increment can be adapted to multiple indexes. It will further be noted, that it is possible to merge index increments 35 and 38 with the base index 31, while index increment 39 is active.

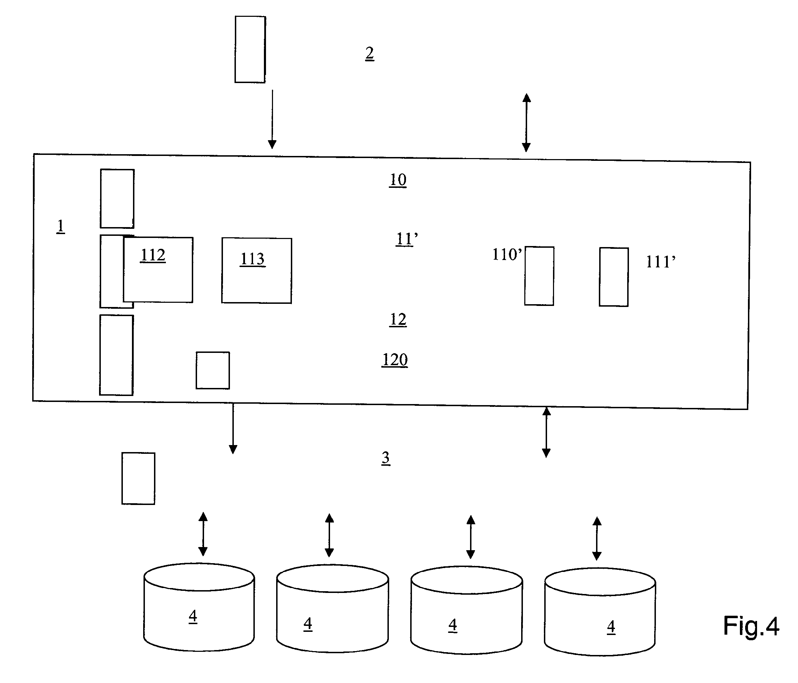

An embodiment of the database management system according to the invention is schematically illustrated in Figure 4. It is basically identical to the database management system already explained with reference to Figure 1, with the exception, that the data and index manager 11' has been modified. It includes two additional modules, the index increment building module 112 and the index increment merging module 113. Besides, the insert processing module 110' and the non-insert processing module 111' have been modified in order to efficiently cooperate with the additional modules 112, 113.

The previously existing modules 110', 111' that perform insert and non-insert-processing need to be modified to allow for the existence of index increments. If an index increment exists, the insert processing will need to be enhanced to insert index entries into the index increment, rather than the base index. For non insert operations, such as SQL queries, the data and index manager 11' will need to be modified to access index entries not only from the base index, but from the index increments as well.

The index increment building module 112 generates one or more index increments for inserting index entries corresponding to data rows being inserted into the database table. The index increment merging module 113 merges the one or more index increments with the one or more base indexes after the new data rows have been inserted. They may be, for example, implemented as computer program product comprising computer program means adapted to do these tasks.

The insert processing module 110' is modified to insert index entries into the index increment rather than in the base index, if an index increment exists. The non-insert processing module 111' is modified to look up data not only in the one or more base indexes, but also in the one or more index increments, to process queries or delete data.

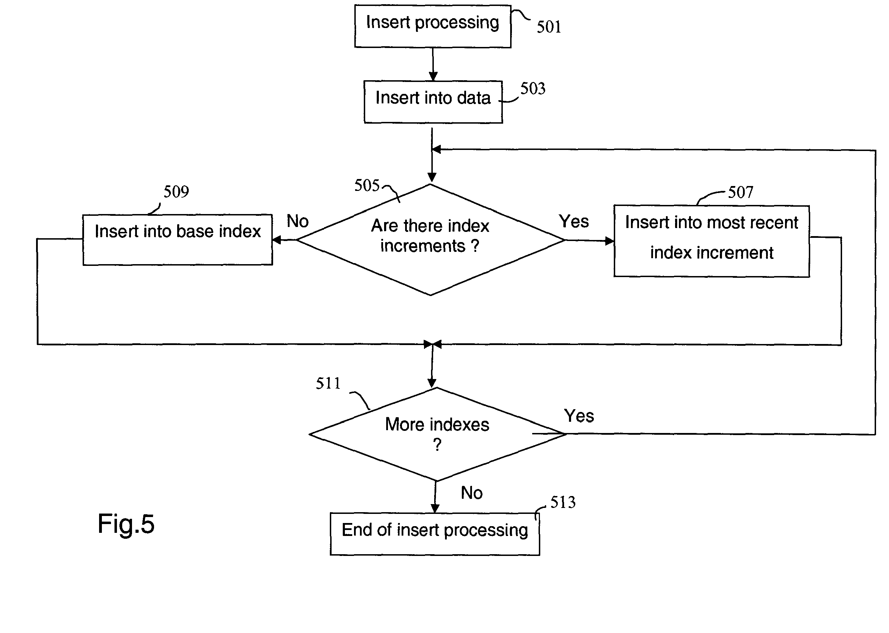

Figure 5 shows a flowchart illustrating insert processing 501. A new row is inserted into the database table (step 503). For updating the indexes, the insert processing module has to check for every base index (step 511), whether there are any index increments (step 505). If there are, the index entry is done into the most recent index increment associated to the base index (step 507). If there are not, the index entry is made into the base index (step 509).

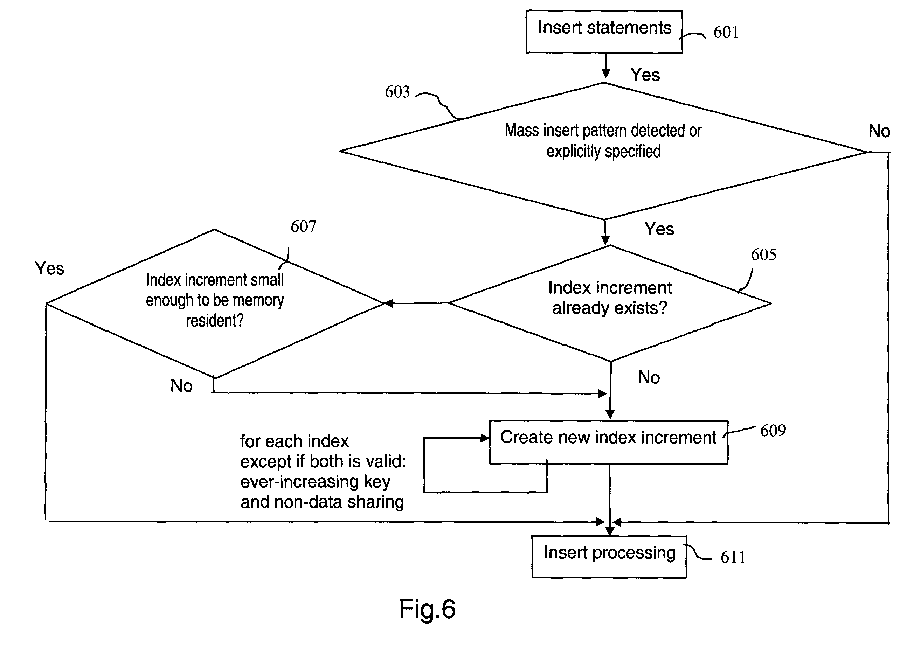

Figure 6 shows a flowchart illustrating the process of building index increments as response to an insert statement (step 601). If a mass insert pattern is explicitly specified, e.g. by setting on a specific session variable, or automatically detected, e.g. by monitoring the insert rate over a specified time interval (see step 603), the possibility of generating an index increment will be considered. It will not be generated, if one or more of them already exist (step 605), and if the most recent index increment is small enough to be memory or cache resident (step 607). This process will be repeated for every index except for ever-increasing key indexes in non-data sharing environments (see step 609). After eventually generating an index increment, the insert processing as explained in Figure 5 is continued.

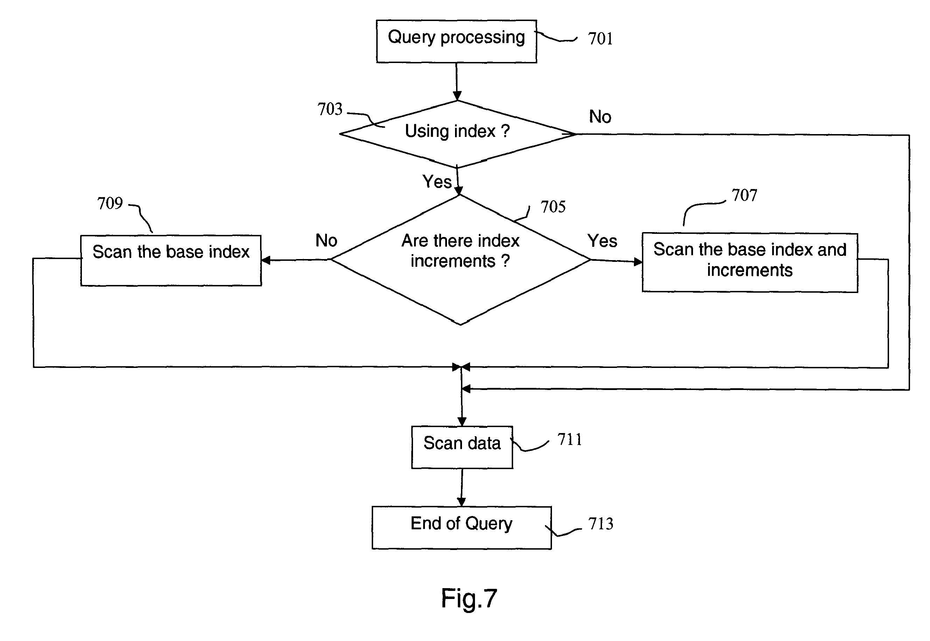

Figure 7 shows a flowchart illustrating how to modify the non-insert processing module with reference to the example of a query. In processing a query (step 701), the first decision is, whether an index is to be used (step 703). Whenever the query uses an index to access the data, it will be checked, if there are index increments for each of the indexes (step 705). If there are index increments, the base indexes and the index increments will be scanned (step 707). This can be done serially or in parallel. If there are no index increments, only the base indexes will be scanned (step 709). Depending on the result of the index scans, the data itself will be scanned and retrieved (step 711) and given back to the application, thus ending the query (step 713).

The query process takes into account that a chosen index is not necessarily monolithic, but may have one or more increments. In general, this will increase the cost of index scan, which can be minimized, if parallel index scan is implemented, but it will be offset many times by superior insert performance. Note that the scan of the active index scan, i.e. the one being updated at the time, is very likely to complete without any read from the storage media, because these pages are most likely cached.

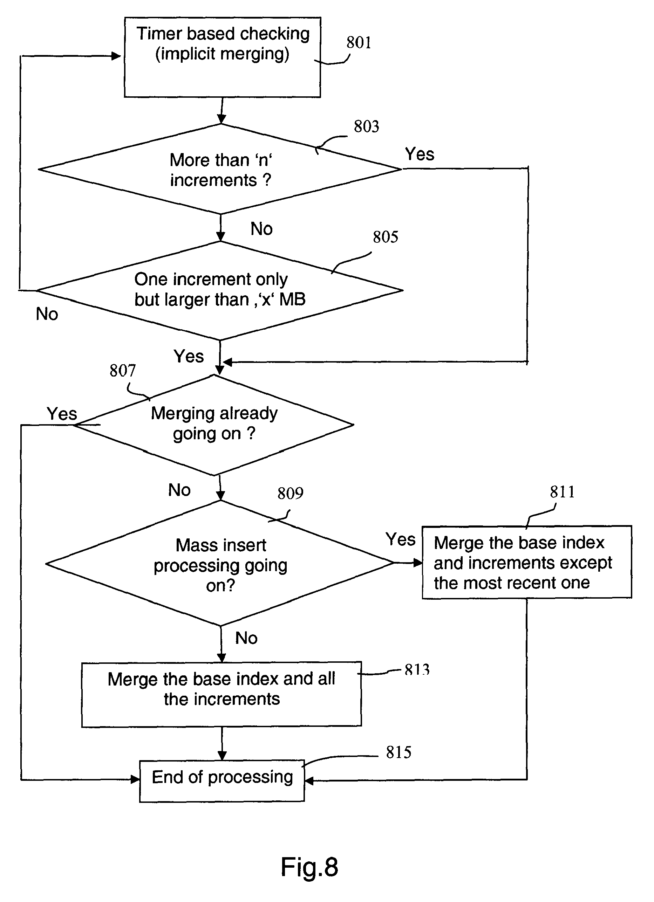

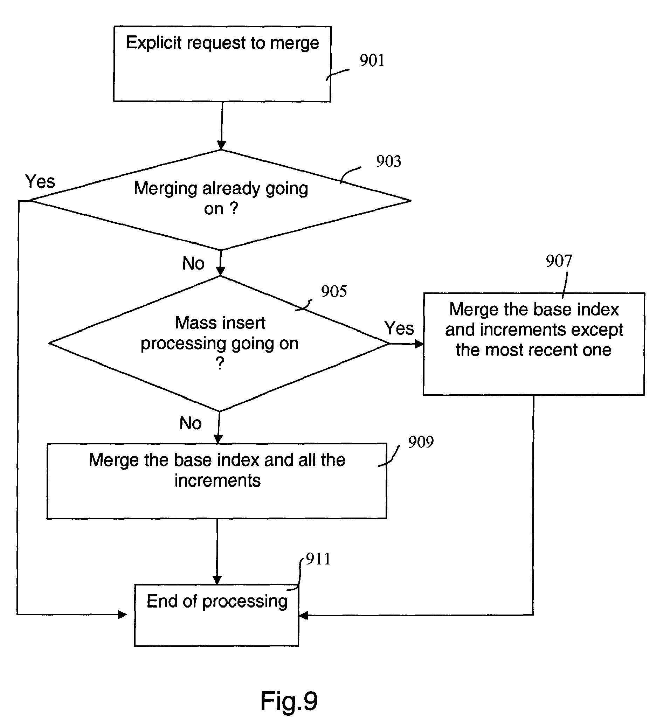

Figures 8 and 9 show flowcharts illustrating the merging of index increments with the base index. As shown in Figure 8, the merge can be initiated implicitly (step 801), for example by a system agent that runs in the background and checks for some criteria that merging is due. A possible criterion is e.g. the number of index increments (step 803) or its size (step 805), but it can also be the overall query response time or any other indicator.

As shown in figure 9, the merge can as well be initiated explicitly on administrator request (step 901).

Once the merge has been initiated, a check whether the merge process is already going on will be performed (steps 807, 903). If yes, an appropriate message will be returned and no further action will be performed. If no, a check whether mass insert processing is currently running will be done (steps 809, 905). As merging during that process can be disruptive, only the base indexes and the index increments except the most recent one will be merged (steps 811, 907). If there is no mass insert processing going on, the base index is merged with all index increments to create a new base index.

The merging may be performed according to any method known to the person skilled in the art, such as reorganization or rebuilding. In order to simplify processing and improve query performance, the merging process should happen before the next mass insert process to avoid creating more than one index increments per base index.

It will be noted that flows as described with reference to Figures 5 to 9 may easily be modified to take into account multiple indexes.

### LIST OF REFERECE NUMERALS

- 1: data management device
- 2: application program
- 3: media manager
- 4: storage
- 10: relational data system
- 11: data and index manager
- 11': modified data and index manager
- 110: insert processing module
- 110': modified insert processing module
- 111: non-insert processing module
- 111': modified non-insert processing module
- 112: index increment building module
- 113: index increment merging module
- 12: cache manager
- 120: cache
- 20: data table
- 21: base index
- 22: base index
- 23: base index
- 201: row
- 202: row
- 203: row
- 211: index entry
- 212: index entry
- 213: index entry
- 221: index entry
- 231: index entry
- 30: data table
- 301: row
- 302: row
- 303: row
- 304: row
- 31: base index
- 32: base index
- 33: base index
- 35: index increment
- 36: index increment
- 37: index increment
- 38: index increment
- 39: index increment

## Claims

1. In a database management system for managing a database storing a database table comprising a plurality of data pages, each data page capable of storing a plurality of data rows, said data rows storing information organized into particular columns, said database table having a base index for logically ordering said plurality of data rows, said base index comprising a plurality of index entries wherein each data row is referenced by a corresponding index entry, a method for indexing the database, said method comprising the steps of:
- inserting a row;
- generating an index increment;
- making an index entry concerning said row into said index increment; and
- merging said index increment with said base index.

2. The method according to claim 1, wherein more than one row is inserted, all index entries concerning the rows are made into said index increment, and the merging is done after all rows have been inserted and indexed.

3. The method according to claim 1 or 2, wherein more than one row is inserted and more than one index increment is generated.

4. The method according to any of claims 1 to 3, wherein the database comprises an additional base index, and an additional index increment is generated and merged with the additional base index.

5. A database management system (1) for managing a database storing a database table (30) comprising a plurality of data pages, each data page capable of storing a plurality of data rows (301, 302, 303), said data rows storing information organized into particular columns, said database table (30) having a base index (31) for logically ordering said plurality of data rows, said base index (31) comprising a plurality of index entries wherein each data row is referenced by a corresponding index entry, said database management system (1) having data and index managing means (11) with insert processing means (110, 110') and non-insert processing means (111, 111'), wherein the data and index managing means (11) has additionally
- index increment building means (112) for generating an index increment (35, 36, 37), when a row is inserted, to enter an index entry concerning said row into said index increment (35, 36, 37), and
- index increment merging means (113) for merging said index increment (35, 36, 37) with said base index (31, 32)

6. The database management system according to claim 5, wherein the insert processing means (110') and the non-insert processing means (111') are adapted to cooperate with the index increment building means (112) and the index increment merging means (113).

7. The database management system according to claim 5 or 6, wherein the non-insert processing means (111') is adapted to scan not only said base index (31), but also said incremental index (35), if there is any.

8. The database management system according to any of claims 5 to 7, wherein the insert processing means (110') is adapted to activate the incremental index building means (112), when it inserts a row.

9. The database management system according to any of claims 5 to 8, wherein the insert processing means (110') is adapted to activate the index increment merging means (113), after it has finished inserting.

10. The database management system according to any of claims 5 to 9, further comprising a relational data system (10) and a cache managing means (12).

11. A computer program product for a database management system for managing a database storing a database table comprising a plurality of data pages, each data page capable of storing a plurality of data rows, said data rows storing information organized into particular columns, said database table having a base index for logically ordering said plurality of data rows, said base index comprising a plurality of index entries wherein each data row is referenced by a corresponding index entry, said computer program product comprising computer program means being adapted to:
- generate one or more index increments in case one or more rows are inserted into the database table; and
- merge the one or more index increments with said base index.

12. The computer program product according to claim 11, wherein the database comprises an additional base index and wherein the computer program product comprises computer program means adapted to generate an additional index increment, and merge it with the additional base index.

13. A data processing program for execution in a data processing system comprising software code portions for performing a method according to anyone of the preceding claims 1 to 4 when said program is run on a computer.
